# EUROPÄISCHE PATENTSCHRIFT

(11) **EP 3 243 717 B1**
(45) Veröffentlichungstag und Bekanntmachung des Hinweises auf die Patenterteilung: **30.01.2019**
(21) Anmeldenummer: 17168242.0
(22) Anmeldetag: 26.04.2017
(51) Int. Cl.: B60W 30/14, B62D 15/02, B60W 30/18, B60W 30/16, B60W 30/10, G01S 13/93, B60W 50/00, B60K 31/00, G05D 1/02

(54) **KRAFTFAHRZEUG-STEUERVORRICHTUNG UND VERFAHREN ZUM BETREIBEN DER STEUERVORRICHTUNG ZUM AUTONOMEN FÜHREN EINES KRAFTFAHRZEUGS**
MOTOR VEHICLE CONTROL DEVICE AND METHOD FOR OPERATING THE CONTROL DEVICE FOR AUTONOMOUS DRIVING OF A MOTOR VEHICLE
DISPOSITIF DE COMMANDE DE VÉHICULE AUTOMOBILE ET PROCÉDÉ DE FONCTIONNEMENT DU DISPOSITIF DE COMMANDE DESTINÉ AU GUIDAGE AUTONOME D'UN VÉHICULE AUTOMOBILE

(30) Priorität: 10.05.2016 DE 102016208000
(43) Veröffentlichungstag der Anmeldung: 15.11.2017
(73) Patentinhaber: VOLKSWAGEN AKTIENGESELLSCHAFT, 38440 Wolfsburg (DE)
(72) Erfinder: Ulbrich, Simon, 38118 Braunschweig (DE); Großjohann, Simon, 38442 Wolfsburg (DE); Appelt, Christian, 38518 Gifhorn (DE); Homeier, Kai, 30453 Hannover (DE)

(56) Entgegenhaltungen:
- DE-A1- 10 012 737
- DE-A1-102004 029 369
- DE-A1-102005 050 662
- JP-A- 2009 248 892
- KAWABE T ET AL: "An optimal path generator using a receding horizon control scheme for intelligent automobiles", CONTROL APPLICATIONS, 2004. PROCEEDINGS OF THE 2004 IEEE INTERNATIONAL CONFERENCE ON TAIPEI, TAIWAN SEPT. 2-4, 2004, PISCATAWAY, NJ, USA,IEEE, Bd. 2, 2. September 2004 (2004-09-02), Seiten 1597-1602, XP010764105, DOI: 10.1109/CCA.2004.1387604 ISBN: 978-0-7803-8633-4

## Beschreibung

Die Erfindung betrifft ein Verfahren zum Betreiben einer Steuervorrichtung, welche zum autonomen Fahren oder Führen eines Kraftfahrzeugs ausgelegt ist. Mit anderen Worten können durch die Steuervorrichtung eine Längsführung und eine Querführung des Kraftfahrzeugs ohne Zutun eines Fahrers durchgeführt werden. Zu der Erfindung gehören auch die Steuervorrichtung, welche gemäß dem Verfahren betreibbar ist, sowie ein Kraftfahrzeug mit der Steuervorrichtung.

Bei der Entwicklung von automatisierten Fahrzeugen für den Straßenverkehr kommt es häufig zu Situationen, in denen ein automatisiert oder autonom fahrendes Fahrzeug auf einer mehrstreifigen Straße fährt. Hierbei kann es vorkommen, dass ein vorausfahrendes Fremdfahrzeug oder Vorderfahrzeug nur marginal langsamer fährt als eine der Steuervorrichtung für die Längsführung vorgegebene Zielgeschwindigkeit oder Sollgeschwindigkeit. Ein Geschwindigkeitsnachteil von 1 bis 2 Kilometer pro Stunde ist bei heutigen Steuervorrichtungen nicht groß genug, um einen Fahrstreifenwechsel zum Überholen des langsameren Vorderfahrzeugs zu bewirken. Hiergegen sprechen zum Beispiel Komfortaspekte, da ein Beschleunigungsvorgang für das Überholen mit Lenkmanövern und Beschleunigungskräften und Motorgeräuschen verbunden ist. Allerdings würde nach mehreren Minuten ein menschlicher Fahrer oder auch ein Passagier sich wünschen, dass das automatisierte Fahrzeug dennoch überholt. Während also in der momentanen Situation der Geschwindigkeitsnachteil marginal erscheint, wirkt er sich auf längere Dauer doch signifikant aus.

Ein technisch ähnliches Problem stellt das Überholen eines langsam vorausfahrenden Fahrzeugs auf einer Landstraße dar. Hier muss zum Überholen die Fahrspur für den Gegenverkehr genutzt werden. Dies kann dennoch sinnvoll sein, wenn die Fahrgeschwindigkeit des vorausfahrenden Fremdfahrzeugs deutlich unter der Sollgeschwindigkeit liegt oder auch nur marginal unter der Sollgeschwindigkeit, dafür aber abzusehen ist, dass das Fremdfahrzeug für einen längeren Zeitraum vorausfahren wird.

Aus der EP 1 777 143 B1 und der EP 0 443 185 A2 ist bekannt, dass in einem Kraftfahrzeug eine Erkennungseinrichtung bereitgestellt sein kann, die in einer Umgebung des Kraftfahrzeugs befindliche Objekte, beispielsweise Fremdfahrzeuge, erkennen und auch eine Relativgeschwindigkeit der Objekte bezüglich des Kraftfahrzeugs ermitteln kann. Durch eine Steuervorrichtung, welche die Erkennungseinrichtung zum Erkennen von Fremdfahrzeugen nutzt, kann in Abhängigkeit von der Lage und den Geschwindigkeitswerten der Fremdfahrzeuge eine Überholempfehlung oder eine Spurwechselempfehlung erzeugen. Aus einer wissenschaftlichen Veröffentlichung von Kawabe et al. (T. Kawabe, H. Nishira, T. Ohtsuka, "An Optimal Path Generator Using a Receding Horizon Control Scheme for Intelligent Automobiles", Proceedings of the 2004 IEEE International Conference on Control Applications, Taipei, Taiwan, 2004) ist ein Modell bekannt, um die Geduld eines Fahrers zu simulieren, während sein Fahrzeug hinter einem Fremdfahrzeug fährt, das langsamer ist als eine vom Fahrer vorgebebene Sollgeschwindigkeit.

DE 10012737 A1 offenbart die Merkmale des Oberbegriffs des Anspruchs 1.

Der Erfindung liegt die Aufgabe zugrunde, mittels einer Steuervorrichtung für einen autonomen Fahrbetrieb eine Überholsituation, bei welcher ein vorausfahrendes Fremdfahrzeug nur geringfügiger langsamer als eine vorgegebene Sollgeschwindigkeit fährt, einzuschätzen.
Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie Figuren offenbart.
Durch die Erfindung ist ein Verfahren zum Betreiben einer Steuervorrichtung zum autonomen Führen eines Kraftfahrzeugs bereitgestellt. Das autonome Führen umfasst insbesondere das Regeln oder Einstellen einer Fahrgeschwindigkeit, also die Längsführung. Zusätzlich kann das autonome Führen auch eine Querführung, also das Lenken des Kraftfahrzeugs, umfassen.
Durch die Steuervorrichtung soll also zumindest die Fahrgeschwindigkeit des Kraftfahrzeugs eingestellt werden. Hierzu wird eine einzustellende Fahrgeschwindigkeit des Kraftfahrzeugs als Sollgeschwindigkeit vorgegeben. Das Verfahren geht von der Fahrsituation aus, dass durch die Steuervorrichtung während einer Fahrt mittels einer Erkennungseinrichtung ein langsamer als die Sollgeschwindigkeit vorausfahrendes Fremdfahrzeug erkannt wird. Die Erkennungseinrichtung kann auf der Grundlage zum Beispiel des eingangs beschriebenen Stands der Technik bereitgestellt sein. Das Verfahren geht dabei davon aus, dass ein Geschwindigkeitsunterschied einer Fahrgeschwindigkeit des Fremdfahrzeugs zu der Sollgeschwindigkeit zwar größer als Null (das Fremdfahrzeug fährt langsamer), aber kleiner als ein vorbestimmter Höchstwert ist. Mit anderen Worten fährt das Fremdfahrzeug nur geringfügig langsamer als die Sollgeschwindigkeit, wobei "geringfügig" definiert ist durch den Höchstwert. Der Höchstwert kann zum Beispiel in einem Bereich von 2,5 Meter pro Sekunde bis 5 Meter pro Sekunde liegen.

Es ist also in der Fahrsituation ein nur marginal langsamer als die Sollgeschwindigkeit vorausfahrendes Fremdfahrzeug dafür verantwortlich, dass die Steuervorrichtung nicht die Sollgeschwindigkeit einstellen kann. Hier muss durch die Steuervorrichtung entschieden werden, ob sich ein Überholmanöver lohnt oder ob dieses sinnvoll ist. In der beschriebenen Fahrsituation wird daher ein Akkumulatorwert auf einen Startwert eingestellt. Der Startwert kann zum Beispiel 0 betragen. In mehreren nacheinander durchgeführten Prüfdurchläufen wird dann jeweils die folgende Schrittfolge durchgeführt. Es wird ein aktueller Geschwindigkeitswert des Geschwindigkeitsunterschieds erfasst. Es wird also ein Abstand oder eine Differenz der aktuellen Fahrgeschwindigkeit zur Sollgeschwindigkeit ermittelt. Es kann z.B. ein Prüfdurchlauf pro Sekunde durchgeführt werden oder allgemein in einem Zeitintervall, das von 1 Sekunde bis 2 Minuten betragen kann. In Abhängigkeit von dem Geschwindigkeitswert wird ein Vorteilswert gebildet. Der Vorteilswert ist umso größer, je größer der Geschwindigkeitsunterschied ist, d.h. je größer die Differenz zwischen der Fahrgeschwindigkeit des Fremdfahrzeugs und der Sollgeschwindigkeit ist (wobei die Fahrgeschwindigkeit kleiner als die Sollgeschwindigkeit ist). Der Vorteilswert wird zu dem Akkumulatorwert hinzuaddiert. Mit anderen Worten kann nach mehreren Prüfdurchläufen der Akkumulatorwert gewachsen sein oder sich vergrößert haben. Falls der Akkumulatorwert ein vorbestimmtes Überholkriterium erfüllt, wird ein Überholsignal zum Freigeben eines Überholmanövers erzeugt. Das Überholsignal signalisiert also einen Überholwunsch, wie ihn auch zum Beispiel ein Fahrer oder allgemein eine Person empfinden könnte, wenn für einen längeren Zeitraum, d.h. für mehrere Prüfdurchläufe, erkannt wird, dass das vorausfahrende Fremdfahrzeug marginal langsamer als die Sollgeschwindigkeit gefahren ist.

Durch die Erfindung ergibt sich der Vorteil, dass die beschriebene Fahrsituation (marginal langsamer vorausfahrendes Fremdfahrzeug) nicht nur auf der Grundlage einer einzelnen Messung bewertet oder beurteilt wird, sondern auch ein zeitlicher Kontext berücksichtigt werden kann, also überprüft wird, wie lange schon mit welchem Geschwindigkeitsunterschied das Fremdfahrzeug voraus fährt. Hierdurch kann auch dann ein Überholmanöver als sinnvoll oder lohnenswert erkannt werden, wenn einzelne Messungen des Geschwindigkeitsunterschieds eigentlich gegen ein Überholmanöver sprechen, weil dies zum Beispiel einen Geschwindigkeitsvorteil von nur 1 Meter pro Sekunde bringt, was bei singulärer oder einmaliger Betrachtung zum Beispiel gegen Komfortaspekte sprechen würde, wie dies eingangs beschrieben wurde.

Die zum Durchführen des Verfahrens ausgelegte Steuervorrichtung kann beispielsweise als Steuergerät für ein Kraftfahrzeug ausgestaltet sein. Die Steuervorrichtung ist zum Durchführen einer Ausführungsform des erfindungsgemäßen Verfahrens eingerichtet. Hierzu kann die Steuervorrichtung eine Prozessoreinrichtung mit Programmcode aufweisen, der dazu eingerichtet ist, bei Ausführen durch die Prozessoreinrichtung eine Ausführungsform des erfindungsgemäßen Verfahrens durchzuführen. Die Prozessoreinrichtung kann hierzu zum Beispiel einen Mikroprozessor oder einen Mikrocontroller aufweisen. Der Programmcode kann in einem Datenspeicher der Prozessoreinrichtung gespeichert sein.

Die Verwendung des Akkumulatorwerts macht das Verfahren sehr flexibel, wenn es um die Berücksichtigung einer Änderung der Fahrsituation geht, die sich während der Prüfdurchläufe ergeben kann.

In einem Prüfdurchlauf wird der Akkumulatorwert auf den Startwert zurückgesetzt und/oder der aktuelle Geschwindigkeitswert oder der aktuelle Vorteilswert ignoriert, falls eine Zeitdauer, seit welcher die besagte Erkennungseinrichtung das Fremdfahrzeug mit einem Konfidenzwert größer als ein vorbestimmter Mindestkonfidenzwert erkennt, kleiner als eine vorbestimmte Mindestdauer ist. Ein Konfidenzwert gibt an, wie zuverlässig durch die Erkennungseinrichtung das Fremdfahrzeug erkannt oder klassifiziert werden konnte. Ein Konfidenzwert kann beispielsweise durch einen statistischen Klassifikator als ein Bestandteil eines Erkennungsergebnisses ausgegeben werden. Beispielsweise kann ein solcher Konfidenzwert durch ein Hidden-Markov-Modell oder ein neuronales Netzwerk erzeugt oder ausgegeben werden. Falls also die Erkennung des Fremdfahrzeugs noch nicht lange genug (definiert durch die besagte Mindestdauer) erkannt worden ist, wird der Geschwindigkeitswert oder der Vorteilswert ignoriert und/oder der Akkumulatorwert auf dem Startwert gehalten. Mit anderen Worten fängt also die Auswertung gemäß dem Verfahren erst nach einer vorbestimmten Zeitdauer an, die durch die Mindestdauer angegeben ist.

Zu der Erfindung gehören auch vorteilhafte Weiterbildungen, durch deren Merkmale sich zusätzliche Vorteile ergeben.

Wie bereits ausgeführt, wird zu dem aktuellen Geschwindigkeitswert des Geschwindigkeitsunterschieds jeweils ein Vorteilswert gebildet. Bevorzugt wird zum Ermitteln des Vorteilswerts der Geschwindigkeitswert auf ein Intervall abgebildet, das von einem vorbestimmten Mindestwert bis zu einem vorbestimmten Höchstwert reicht. Insbesondere kann der Geschwindigkeitswert auf ein Intervall bis zu dem Wert 1 abgebildet werden. Durch das Abbilden des Geschwindigkeitswerts auf ein Intervall ergibt sich der Vorteil, dass der Vorteilswert unabhängig von einer absoluten Fahrgeschwindigkeit stets eine aussagekräftige Angabe zu einer Vorteilhaftigkeit des ermittelten Geschwindigkeitsunterschieds angibt. Zum Berechnen des Vorteilswerts kann beispielsweise der Geschwindigkeitswert durch den besagten Höchstwert dividiert werden, welcher die Grenze für die Definition des marginal langsamer fahrenden Fremdfahrzeugs darstellt. Beträgt also der Höchstwert beispielsweise 3,5 Meter pro Sekunde, so kann der Geschwindigkeitswert durch 3,5 Meter pro Sekunde dividiert werden, wodurch sich als größter Vorteilswert der Wert 1 ergibt.

Es kann vorgesehen sein, dass in einem Prüfdurchlauf der Akkumulatorwert auf den Startwert zurückgesetzt und/oder der aktuelle Geschwindigkeitswert oder der aktuelle Vorteilswert ignoriert wird, falls detektiert wird, dass eine Überholspur für das Überholmanöver fehlt. Wird also ein vorausfahrendes Fremdfahrzeug erkannt, während noch ein Überholmanöver möglich ist, und kommt diese Überholmöglichkeit während des Beobachtens des Fremdfahrzeugs, d.h. während der Prüfdurchläufe, abhanden, so wird dies berücksichtigt. Hierdurch ist vermieden, dass das Überholsignal erzeugt wird, solange keine Überholspur zur Verfügung steht. Es wird also in jedem Prüfdurchlauf, bei welchem das Fehlen einer Überholspur detektiert wird, der Akkumulatorwert immer wieder auf den Startwert zurückgesetzt oder der Akkumulatorwert zumindest nicht verändert.

Der Akkumulatorwert kann in einem Prüfdurchlauf auch dann auf den Startwert zurückgesetzt und/oder der aktuelle Geschwindigkeitswert oder der aktuelle Vorteilswert ignoriert werden, falls der Geschwindigkeitswert oder der Vorteilswert größer als ein vorbestimmter Abbruchswert ist. Der Geschwindigkeitswert wird größer, falls das vorausfahrende Fremdfahrzeug langsamer wird. Dies kann beispielsweise der Fall sein, wenn das vorausfahrende Fremdfahrzeug abbremst. Damit hierdurch nicht der Akkumulatorwert sehr schnell größer wird und unmittelbar das Überholkriterium erfüllt, wird der Akkumulatorwert zurückgesetzt und/oder der aktuelle Geschwindigkeitswert oder der aktuelle Vorteilswert ignoriert. Allgemein wird überprüft, ob eine Situationsänderung der Fahrsituation größer als ein vorbestimmter Abbruchswert ist. Dies verhindert eine ungewollte Überreaktion der Steuervorrichtung. Eine Erzeugung des Überholsignals wird dann bevorzugt von einem vorbestimmten anderen Überholkriterium abhängig gemacht. Mit anderen Worten wird die Fahrsituation auf der Grundlage eines anderen Überholkriteriums neu bewertet. Das Überholen wird dann durch das andere Überholkriterium entschieden werden, dass zum Beispiel berücksichtigen kann, warum das Fremdfahrzeug langsamer geworden ist. Falls beispielsweise eine rote Verkehrsampel vorausliegt, wird nicht überholt. Das andere Überholkriterium kann aus dem Stand der Technik herangezogen werden und ist nicht Bestandteil dieser Erfindung.

In der Situation, in welcher ein Fremdfahrzeug zwar erkannt wurde, aber noch nicht für die Mindestdauer mit einem Konfidenzwert größer als der Mindestkonfidenzwert erkannt wurde, ist bevorzugt vorgesehen, dass für zumindest einen nachfolgenden Prüfdurchlauf der dann jeweils ermittelte Vorteilswert mit einem Skalierungsfaktor, der größer als 1 ist, skaliert wird. Mit anderen Worten wird also die Vergrößerung des Akkumulatorwerts beschleunigt. Sobald also die Mindestdauer überschritten oder vorbei ist, wird der Vorteilswert, vergrößert oder skaliert um den Skalierungsfaktor, zu dem Akkumulatorwert hinzugerechnet. Hierdurch wird dann in weniger Prüfdurchläufen als ohne den Skalierungsfaktor das Überholkriterium erfüllt. Damit wird die Zeitdauer kompensiert, die abgewartet wird (Mindestdauer), bevor ein erkanntes Fremdfahrzeug überhaupt berücksichtigt wird.

Falls in einem Prüfdurchlauf erkannt wird, dass der Geschwindigkeitswert 0 beträgt (das Fremdfahrzeug fährt mit der Sollgeschwindigkeit) oder das Fremdfahrzeug sogar schneller als die Sollgeschwindigkeit fährt, wird in diesem Fall bevorzugt der Akkumulatorwert auf den Startwert zurückgesetzt und/oder der Geschwindigkeitswert oder der Vorteilswert ignoriert. Es wird aber zumindest ein weiterer Prüfdurchlauf durchgeführt. Mit anderen Worten wird das Verfahren nicht schon dann abgebrochen, wenn einmal erkannt wird, dass das Fremdfahrzeug nun schnell genug fährt (mit der Sollgeschwindigkeit oder schneller). Stattdessen wird eine Hysterese bereitgestellt, durch welche die weitere Durchführung von zumindest einem Prüfdurchlauf sichergestellt ist. Dies verhindert ein sprunghaftes Verändern des Steuerverhaltens der Steuervorrichtung.

Um ausgehend von dem Akkumulatorwert zu entscheiden, ob das Überholsignal erzeugt werden soll, ist bevorzugt vorgesehen, dass das Überholkriterium vorgibt, dass der Akkumulatorwert größer als ein vorbestimmter Schwellenwert ist und/oder dass eine Anstiegsrate des Akkumulatorwerts größer als eine vorbestimmte Mindestrate ist. Es kann also auf den Absolutwert des Akkumulatorwerts und/oder auf seine zeitliche Veränderungsrate reagiert werden. Zusätzlich oder alternativ dazu kann vorgesehen sein, dass das Überholkriterium abhängig von einer verbleibenden, restlichen geplanten Fahrstrecke eingestellt wird. Beispielsweise kann der Schwellenwert und/oder die Mindestrate in Abhängigkeit von der restlichen Fahrstrecke eingestellt werden. Die Fahrstrecke kann beispielsweise anhand eines bekannten oder eingestellten Navigationsziels ermittelt werden. Hierdurch ergibt sich der Vorteil, dass der akkumulierte Vorteil, wie er durch den Akkumulatorwert repräsentiert ist, ins Verhältnis zu der Fahrstrecke gesetzt wird. Beträgt die restliche Fahrstrecke beispielsweise nur 1 Kilometer, so ist ein Überholmanöver weniger lohnenswert als für den Fall, dass noch eine Fahrstrecke von 200 Kilometer bevorsteht.

Zu der Erfindung gehört auch ein Kraftfahrzeug, welches die erfindungsgemäße Steuervorrichtung aufweist. Das Kraftfahrzeug ist bevorzugt als Kraftwagen, insbesondere als Personenkraftwagen oder Lastkraftwagen, ausgestaltet. Die Steuervorrichtung kann Bestandteil einer Fahrerassistenzeinrichtung sein, durch welche der beschriebene autonome oder fahrerlose Fahrbetrieb bereitgestellt ist.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: eine Skizze zur Veranschaulichung einer Fahrsituation, in welcher das erfindungsgemäße Verfahren durchgeführt werden kann;
- Fig. 3: ein Flussschaudiagramm zur Beschreibung einer Ausführungsform des erfindungsgemäßen Verfahrens, wie es in dem Kraftfahrzeug von Fig. 1 durchgeführt werden kann;
- Fig. 4: eine Detailansicht zu dem Flussschaudiagramm von Fig. 3; und
- Fig. 5: eine weitere Detailansicht zu dem Flussschaudiagramm von Fig. 3.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen.

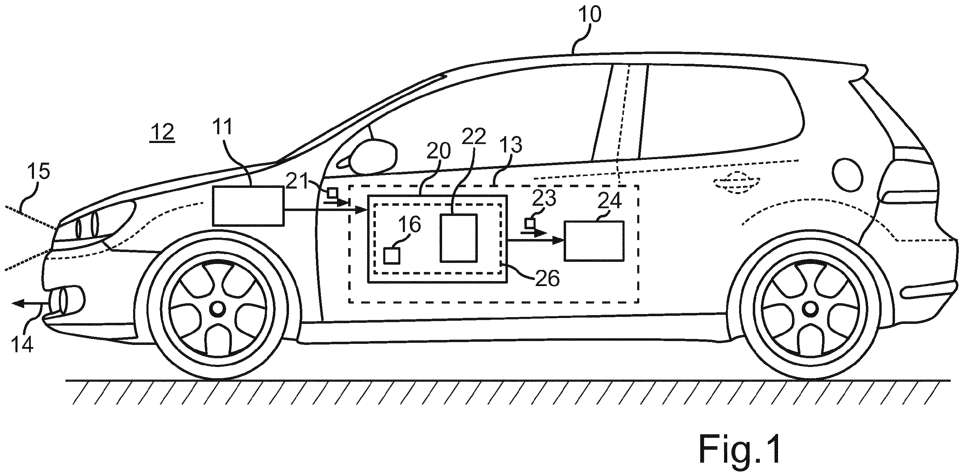

Fig. 1 zeigt ein Kraftfahrzeug 10, bei welchem es sich zum Beispiel um einen Kraftwagen, insbesondere einen Personenkraftwagen oder Lastkraftwagen, handeln kann. Das Kraftfahrzeug 10 kann eine Erkennungseinrichtung 11 zum Erkennen von vorausfahrenden Fahrzeugen und weiteren Objekten und Straßen in einer Umgebung 12 des Kraftfahrzeugs 10 sowie eine Fahrerassistenzeinrichtung 13 zum autonomen oder fahrerlosen Führen des Kraftfahrzeugs 10 aufweisen. Durch die Fahrerassistenzeinrichtung 13 kann eine Fahrgeschwindigkeit 14 des Kraftfahrzeugs 10 geregelt oder eingestellt werden. Die Fahrgeschwindigkeit 14 soll in dem beschriebenen Beispiel durch die Fahrerassistenzeinrichtung 13 auf eine Sollgeschwindigkeit 16 eingestellt werden. Die Sollgeschwindigkeit 16 kann z.B. von einem Fahrer vorgegeben sein. Hierbei kann durch die Erkennungseinrichtung 11 in aus dem Stand der Technik bekannter Weise die Umgebung 12 überwacht werden. Insbesondere ist ein Erfassungsbereich 15 der Erkennungseinrichtung 11 auf einen vorausliegenden Verkehr gerichtet.

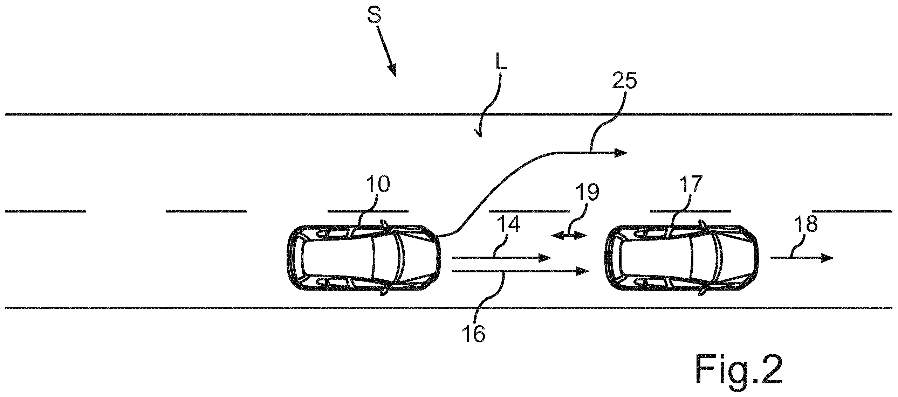

In Fig. 2 ist hierbei veranschaulicht, wie so durch die Erkennungseinrichtung 11 eine aktuelle Fahrsituation S beobachtet oder erkannt werden kann. Durch die Erkennungseinrichtung 11 kann erkannt werden, falls dem Kraftfahrzeug 10 ein Fremdfahrzeug 17 vorausfährt, dessen Fahrgeschwindigkeit 18 geringer ist als die Sollgeschwindigkeit 16. Da das Kraftfahrzeug 10 seine Fahrgeschwindigkeit 14 anpassen muss, also langsamer als die Sollgeschwindigkeit 16 fahren muss, kann sich hier ein Geschwindigkeitsunterschied 19 zur Sollgeschwindigkeit 16 ergeben. Durch die Erkennungseinrichtung 11 kann des Weiteren erkannt werden, dass zusätzlich zu einer aktuell befahrenen Fahrspur eine Überholspur L zur Verfügung steht, über welche das Kraftfahrzeug 10 das vorausfahrende Fremdfahrzeug 17 überholen könnte. Die Erkennungseinrichtung 11 signalisiert die erkannten Objekte als ein Erkennungsergebnis 21 an das Fahrerassistenzsystem 13.

Eine Entscheidung zum Überholen kann durch eine Steuervorrichtung 20 des Fahrerassistenzsystems 13 in Abhängigkeit von einem Erkennungsergebnis 21 der Erkennungseinrichtung 11 mittels einer Entscheidungsmoduls 22 durchgeführt, mittels welchem entschieden wird, ob ein Überholsignal 23 erzeugt werden soll, welches einer Manöverplanung 24 der Fahrerassistenzeinrichtung 13 signalisieren kann, dass das Einleiten eines Überholmanövers 25 sinnvoll oder gewünscht ist. Das Entscheidungsmodul 22 kann beispielsweise als ein Programmmodul einer Prozessoreinrichtung 26 der Steuervorrichtung 20 bereitgestellt sein. Das Programmmodul kann in an sich bekannter Weise Programmcodes für ein Steuerprogramm der Steuervorrichtung 20 umfassen.

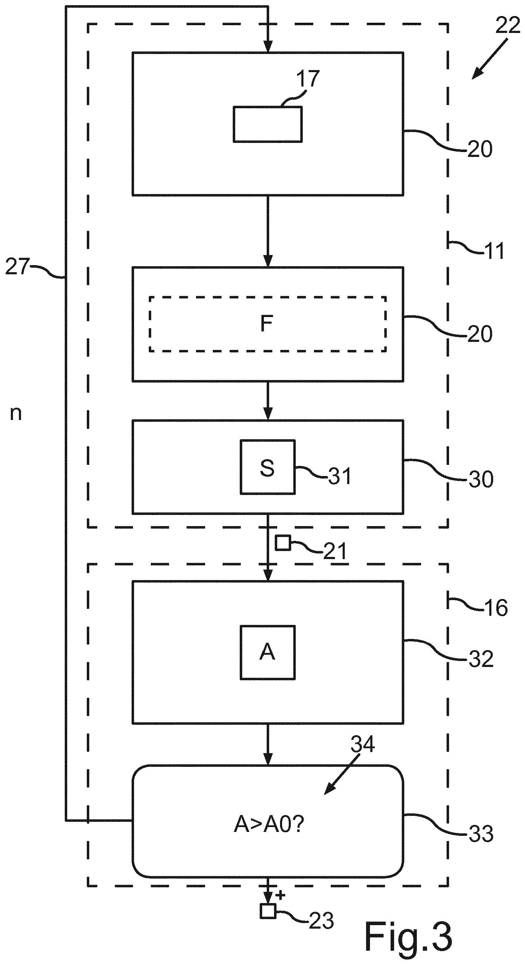

Fig. 3 veranschaulicht die Entscheidungsfindung durch das Entscheidungsmodul 22. In mehreren Prüfdurchläufen 27 kann zunächst eine Objekterkennung 28 zum Erkennen von bewegten oder dynamischen Objekten, wie zum Beispiel des Fremdfahrzeugs 17, eine Infrastrukturerkennung 29 zum Erkennen von Fahrstreifen, wie der Überholspur L, und eine Kartographierung 30 zum Kombinieren der erkannten Infrastrukturobjekte und der erkannten dynamischen Objekte in einer digitalen Karte 31 durchgeführt werden. Somit kann die aktuelle Fahrsituation S ermittelt werden. Diese Fahrsituation S kann dann als Erkennungsergebnis 21 von der Erkennungseinrichtung 11 an die Steuervorrichtung 16 übermittelt werden. Die Steuervorrichtung 16 kann daraufhin ein Verfahren 32 ausführen, durch welches die Vorteilhaftigkeit des Überholmanövers 25 ermittelt wird, und zwar unter der Berücksichtigung, dass der Geschwindigkeitsunterschied 19 nur geringfügig ist, d.h. die aktuelle Fahrgeschwindigkeit 14 nur marginal kleiner als die Sollgeschwindigkeit 16 ist.

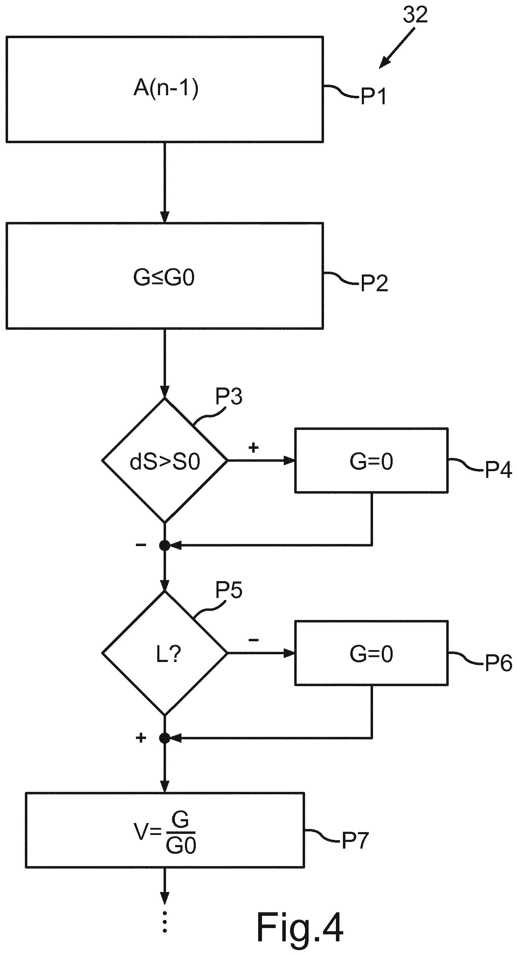

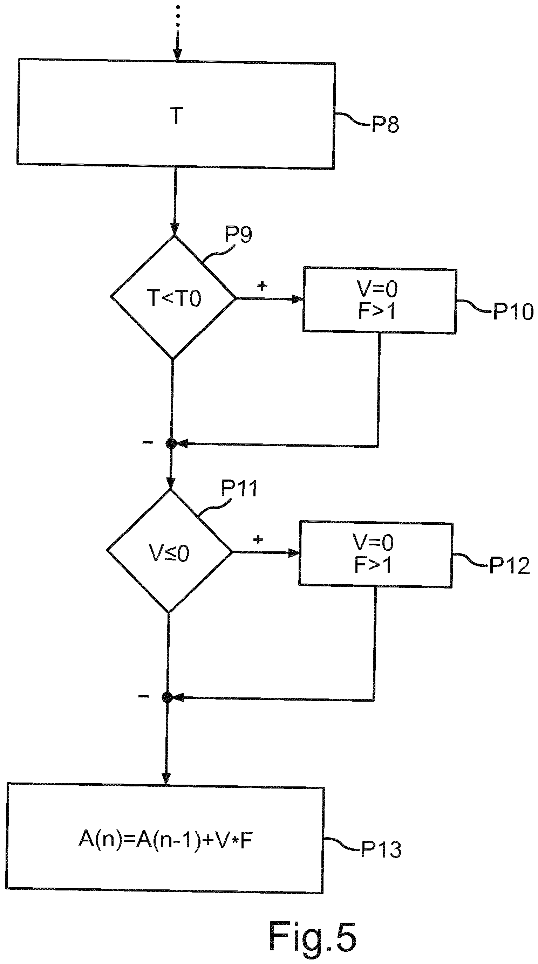

Durch eine Bewertung 33 kann eine Gesamtvorteilhaftigkeit eines Fahrstreifenwechsels auf die Überholspur L ermittelt werden. Die Gesamtvorteilhaftigkeit kann beispielsweise durch einen Akkumulatorwert A ausgedrückt werden, dessen Berechnung im Folgenden anhand von Fig. 4 und Fig. 5 beispielhaft erläutert ist. Zum Entscheiden kann ein Überholkriterium 34 zugrunde gelegt werden kann, welches beispielsweise besagen kann, dass die Gesamtvorteilhaftigkeit in Form des Akkumulatorwerts A größer als ein Schwellenwert A0 sein muss.

Im Zusammenhang mit Fig. 4 und Fig. 5 wird angenommen, dass die Prüfdurchläufe 27 durch einen Zählerwert n identifiziert sind.

Für den ersten Prüfdurchlauf n = 1 kann der Akkumulatorwert A(n=0) auf einen Startwert eingestellt werden, beispielsweise den Wert 0. In einem ersten Prüfschritt P1 kann der Akkumulatorwert A des vorangegangenen Prüfdurchlaufs n -1 aus einem Speicher geladen werden. In einem Prüfschritt P2 kann überprüft werden, ob ein Geschwindigkeitswert G des Geschwindigkeitsunterschieds 19 kleiner als ein Höchstwert G0 ist, der festlegt, ab wann es sich um einen marginalen Geschwindigkeitsunterschied handelt. Ist der Geschwindigkeitswert G größer als der Höchstwert G0, so kann anstelle des Verfahrens 32 ein anderes, bekanntes Verfahren zum Entscheiden über das Überholmanöver 25 zugrunde gelegt werden. Dies ist allerdings nicht Bestandteil der vorliegenden Beschreibung. Der Höchstwert G0 kann z.B. 3,5 Meter pro Sekunde betragen.

In einem Schritt P3 kann überprüft werden, ob sich die aktuelle Fahrsituation S im Vergleich zur Fahrsituation im vorangegangenen Prüfdurchlauf n-1 signifikant geändert hat. Ein Unterschied dS in der Fahrsituation S kann beispielsweise dadurch definiert sein, dass sich der Geschwindigkeitsunterschied 19 verändert hat. Dies deutet beispielsweise auf den Beginn einer Bremsung oder eines Bremsmanövers des Fremdfahrzeugs 17 hin. Ist der Unterschied dS größer als ein Schwellenwert S0 (in Fig. 3 durch ein + symbolisiert), so kann der Akkumulatorwert A auf den Startwert zurückgesetzt werden und/oder der Geschwindigkeitswert G ignoriert werden, was in dem Prüfschritt P4 durch Einstellen eines Geschwindigkeitswerts von 0 erreicht werden kann. Hierdurch wird der aktuelle Geschwindigkeitswert überschrieben.

Falls die Veränderung dS der Fahrsituation S geringer als der Schwellenwert S0 ist (in Fig. 3 durch ein - symbolisiert), so kann in einem Prüfschritt P5 überprüft werden, ob eine Überholspur L zur Verfügung steht. Ist dies nicht der Fall (symbolisiert durch -), so kann der Akkumulatorwert A auf den Startwert zurückgesetzt werden und/oder der Geschwindigkeitswert G ignoriert werden, was im Prüfschritt P6 wieder durch Einstellen des Wertes 0 für den Geschwindigkeitswert G erreicht werden kann.

Aus dem Geschwindigkeitswert G kann in einem Prüfschritt P7 ein Vorteilswert V berechnet werden, indem zum Beispiel der Geschwindigkeitswert G auf den Höchstwert G0 normiert wird: V = G/G0.

Auf den Prüfschritt P7 kann der Prüfschritt P8 folgen, der in Fig. 5 gezeigt ist. In dem Prüfschritt P8 kann überprüft werden, für welche Zeitdauer T die Erkennungseinrichtung 11 bereits das Fremdfahrzeug 17 zumindest mit einem vorbestimmten Mindestkonfidenzwert erkannt hat. In einem Prüfschritt P9 kann überprüft werden, ob die Zeitdauer T kleiner als eine vorbestimmte Mindestdauer T0 ist. Ist dies der Fall (symbolisiert durch +), so kann in einem Prüfschritt P10 der Vorteilswert V ignoriert werden (d.h. V = 0 gesetzt oder überschrieben werden) und für zumindest einen zukünftigen Prüfdurchlauf n+1 ein Skalierungsfaktor F auf einen Wert größer als 1 eingestellt werden, z.B. einen Wert zwischen 1 und 10.

Beträgt die Zeitdauer T dagegen mehr als Mindestdauer T0, (symbolisiert durch -), so kann in einem Prüfschritt P11 überprüft werden, ob im aktuellen Prüfdurchlauf n das Fremdfahrzeug 17 eine Fahrgeschwindigkeit 18 aufweist, die gleich der Sollgeschwindigkeit 16 oder sogar größer als die Sollgeschwindigkeit 16 ist. Dies bedeutet, dass der Vorteilswert V kleiner oder gleich 0 ist. Ist dies der Fall (symbolisiert durch +), so kann in einem Prüfschritt P12 der Vorteilswert ignoriert werden (V = 0) und der Skalierungsfaktor F auf einen Wert größer als 1 eingestellt werden, z.B. einen Wert zwischen 1 und 10.

Schließlich kann in einem Prüfschritt P13 der aktuelle Akkumulatorwert A(n) berechnet werden, indem zu dem Akkumulatorwert A(n -1) des vorangegangenen Prüfdurchlaufs n -1 der Vorteilswert V multipliziert mit dem Skalierungsfaktor F in der in Fig. 5 veranschaulichten Weise hinzuaddiert wird: A(n) = A(n-1) + V * F.

Sodann kann in der Bewertung 33 (Fig. 3) überprüft werden, ob das Überholkriterium 34 erfüllt ist. Ist dies der Fall (symbolisiert durch + in Fig. 3), so kann das Überholsignal 23 erzeugt werden. Andernfalls kann ein weiterer Prüfdurchlauf 27 durchgeführt werden.

Somit wird bei dem Kraftfahrzeug 10 auf einer mehrstreifigen Straße bei einem geringfügig langsameren Vorderfahrzeug abgewägt oder überprüft, ob es vorteilhaft ist, dieses geringfügig langsamere Vorderfahrzeug zu überholen. Eine auf einen einzelnen Zeitpunkt bezogene Betrachtung würde jeweils nicht den Fahrstreifenwechsel gegenüber dem nur marginalen oder kleinen Geschwindigkeitsgewinn rechtfertigen. Ein menschlicher Fahrer würde aber dennoch nach einiger Zeit überholen, da über lange Zeit ein geringer Geschwindigkeitsnachteil eingegangen wird. Oft motivieren auch subjektive Faktoren, wie Sichtbehinderung oder ein als träge empfundener Fahrstil eine Rolle als zusätzliche Entscheidungsfaktoren. Dies wird nun durch die Steuervorrichtung 16 in der beschriebenen Weise implizit berücksichtigt. Es wird hierzu der Gewinn bei einem Fahrstreifenwechsel ermittelt. Dies wird zunächst als Geschwindigkeitsgewinn durch den Geschwindigkeitswert G dargestellt. Der Vorteilhaftigkeitsgewinn ergibt sich somit als gewonnene Delta-Geschwindigkeit. Diese Vorteilhaftigkeit wird aber beschränkt, um ein ungewolltes Verhalten zu verhindern. Dies wird durch den Prüfschritt P3 allgemein repräsentiert. Somit weist die Funktion ein Limit oder eine Begrenzung auf, sodass zum Beispiel bei einem sehr langsam vorausfahrenden Vorderfahrzeug hieraus nicht eine unkontrollierte, sofortige Einleitung eines Überholmanövers 25 resultiert. Des Weiteren werden situationsspezifische Entscheidungskriterien zugrunde gelegt, also z.B. überprüft, ob noch eine Überholspur L zur Verfügung steht und/oder ob das Fremdfahrzeug 17 zuverlässig erkannt wurde und/oder ob das Fremdfahrzeug 17 beschleunigt hat.

Im Ganzen funktioniert der Algorithmus ähnlich einem PID-Regler (PID: Proportional, Integral, Differenzial). Es gibt Zustandsgrößen, die eine Steueraktion (Fahrstreifenwechsel) beeinflussen, wobei eine Zustandsintegration mittels des Akkumulatorwerts A erreicht wird und auf schnell wirkende Zustandsänderungen (z.B. Wegfall der Überholspur L) eine Entscheidung verwerfen oder sie auch bevorzugen.

Insgesamt zeigt das Beispiel, wie durch die Erfindung eine marginale, integrale Vorteilhaftigkeit bei der Bewertung des Überholnutzens eines geringfügig langsamer vorausfahrenden Fremdfahrzeugs bewertet werden kann.

### Bezugszeichenliste

- 10: Fahrzeug
- 11: Erkennungseinrichtung
- 12: Umgebung
- 13: Fahrerassistenzeinrichtung
- 14: Fahrgeschwindigkeit
- 15: Erfassungsbereich
- 16: Sollgeschwindigkeit
- 17: Fremdfahrzeug
- 18: Fahrgeschwindigkeit
- 19: Geschwindigkeitsunterschied
- 20: Steuervorrichtung
- 21: Erkennungsergebnis
- 22: Umgebungsüberwachung
- 23: Überholsignal
- 24: Manöverplanung
- 25: Überholmanöver
- 26: Prozessoreinrichtung
- 27: Prüfdurchlauf
- 28: Objekterkennung
- 29: Infrastrukturerkennung
- 30: Kartographierung
- 31: Karte
- 32: Prüfung
- 33: Bewertung
- 34: Überholkriterium
- A: Akkumulatorwert
- A0: Schwellenwert
- dS: Unterschied
- L: Überholspur
- F: Skalierungsfaktor
- G: Geschwindigkeitswert
- G0: Höchstwert
- P1: Prüfschritt
- P2: Prüfschritt
- P3: Prüfschritt
- P4: Prüfschritt
- P5: Prüfschritt
- P6: Prüfschritt
- P7: Prüfschritt
- P8: Prüfschritt
- P9: Prüfschritt
- P10: Prüfschritt
- P11: Prüfschritt
- P12: Prüfschritt
- P13: Prüfschritt
- S: Fahrsituation
- T: Zeitdauer
- T0: Mindestdauer
- V: Vorteilswert

## Patentansprüche

1. Verfahren zum Betreiben einer Steuervorrichtung (20) zum autonomen Führen eines Kraftfahrzeugs (10), wobei als eine durch die Steuervorrichtung (20) einzustellende Fahrgeschwindigkeit (14) des Kraftfahrzeug (10) eine Sollgeschwindigkeit (16) vorgegeben wird und durch die Steuervorrichtung (20) mittels einer Erkennungseinrichtung (11) ein langsamer als die Sollgeschwindigkeit (16) vorausfahrendes Fremdfahrzeug (17) erkannt wird, wobei ein Geschwindigkeitsunterschied (19) einer Fahrgeschwindigkeit (18) des Fremdfahrzeugs (17) zu der Sollgeschwindigkeit (16) größer als Null, aber kleiner als ein vorbestimmter Höchstwert (G0) ist,
**dadurch gekennzeichnet, dass**
in diesem Fall ein Akkumulatorwert (A) auf einen Startwert eingestellt wird und in mehreren nacheinander durchgeführten Prüfdurchläufen (27) jeweils ein aktueller Geschwindigkeitswert (G) des Geschwindigkeitsunterschieds (19) erfasst wird und in Abhängigkeit von dem Geschwindigkeitswert (G) ein Vorteilswert (V) gebildet wird und der Vorteilswert (V) zu dem Akkumulatorwert (A) hinzuaddiert wird und falls der Akkumulatorwert (A) ein vorbestimmtes Überholkriterium (34) erfüllt, ein Überholsignal (23) zum Freigeben eines Überholmanövers (25) erzeugt wird, wobei
in einem Prüfdurchlauf (27) eine Zeitdauer (T), seit welcher die Erkennungseinrichtung (11) das Fremdfahrzeug (17) mit einem Konfidenzwert größer als ein vorbestimmter Mindestkonfidenzwert erkennt, ermittelt wird und falls die Zeitdauer (T) kleiner als eine vorbestimmte Mindestdauer (T0) ist, der Geschwindigkeitswert (G) oder der Vorteilswert (V) ignoriert und/oder der Akkumulatorwert (A) auf den Startwert zurückgesetzt wird.

2. Verfahren nach Anspruch 1, wobei zum Ermitteln des Vorteilswerts (V) der Geschwindigkeitswert (G) auf ein Intervall bis zu einem vorbestimmten Höchstwert, insbesondere bis 1, abgebildet wird.

3. Verfahren nach einem der vorhergehenden Ansprüche, wobei in einem Prüfdurchlauf (27) der Akkumulatorwert (A) auf den Startwert zurückgesetzt und/oder der Geschwindigkeitswert (G) oder der Vorteilswert (V) ignoriert wird, falls detektiert wird, dass eine Überholspur (L) für das Überholmanöver (25) fehlt.

4. Verfahren nach einem der vorhergehenden Ansprüche, wobei in einem Prüfdurchlauf (27) der Akkumulatorwert (A) auf den Startwert zurückgesetzt und/oder der Geschwindigkeitswert (G) oder der Vorteilswert (V) ignoriert wird, falls eine Situationsänderung (sS der Fahrsituation (S), insbesondere der Geschwindigkeitswert (G) oder der Vorteilswert (V), größer als ein vorbestimmter Abbruchswert (S0) ist.

5. Verfahren nach einem der vorhergehenden Ansprüche, wobei für zumindest einen nachfolgenden Prüfdurchlauf (27) der jeweils ermittelte Vorteilswert (V) mit einem Skalierungsfaktor (F), der größer als 1 ist, skaliert wird.

6. Verfahren nach einem der vorhergehenden Ansprüche, wobei in einem Prüfdurchlauf (27) erkannt wird, dass der Geschwindigkeitswert (G) 0 beträgt oder das Fremdfahrzeug (17) schneller als die Sollgeschwindigkeit (16) fährt, und in diesem Fall zum einen der Akkumulatorwert (A) auf den Startwert zurückgesetzt und/oder der Geschwindigkeitswert (G) oder der Vorteilswert (V) ignoriert wird und zum anderen zumindest ein weiterer Prüfdurchlauf (27) durchgeführt wird.

7. Verfahren nach einem der vorhergehenden Ansprüche, wobei das Überholkriterium (34) vorgibt, dass der Akkumulatorwert (A) größer als ein vorbestimmter Schwellenwert (A0) ist und/oder dass eine Anstiegsrate des Akkumulatorwerts (A) größer als eine vorbestimmte Mindestrate ist.

8. Verfahren nach einem der vorhergehenden Ansprüche, wobei das Überholkriterium (34) abhängig von einer verbleibenden, restlichen geplanten Fahrstrecke eingestellt wird.

9. Steuervorrichtung (20) für ein Kraftfahrzeug (10), wobei die Steuervorrichtung (20) eine Prozessoreinrichtung (26) mit Programmcode (22) aufweist, der dazu eingerichtet ist, bei Ausführen durch die Prozessoreinrichtung (26) ein Verfahren nach einem der vorhergehenden Ansprüche durchzuführen.

10. Kraftfahrzeug (10) mit einer Steuervorrichtung (20) nach Anspruch 9.

## Claims

1. Method for operating a control device (20) for the autonomous guidance of a motor vehicle (10), wherein a nominal speed (16) is predetermined as a driving speed (14) of the motor vehicle (10) to be set by the control device (20) and another vehicle (17) driving in front more slowly than the nominal speed (16) is detected by means of a detection device (11) by the control device (20), wherein a speed difference (19) of a driving speed (18) of the other vehicle (17) with respect to the nominal speed (16) is greater than zero but smaller than a predetermined maximum value (G0),
**characterized in that**
in this case, an accumulator value (A) is set to a starting value and in a number of test runs (27) performed in succession a current speed value (G) of the speed difference (19) is detected and in dependence on the speed value (G) an advantage value (V) is formed and the advantage value (V) is added to the accumulator value (A) and, if the accumulator value (A) meets a predetermined overtaking criterion (34), an overtaking signal (23) is generated for allowing an overtaking maneuver (25), wherein
in a test run (27), a period of time (T) since which the detection device (11) detects the other vehicle (17) with a confidence value greater than a predetermined minimum confidence value is determined and if the period of time (T) is less than a predetermined minimum period (T0), the speed value (G) or the advantage value (V) is ignored and/or the accumulator value (A) is reset to the starting value.

2. Method according to Claim 1, wherein, to determine the advantage value (V), the speed value (g) is mapped onto an interval up to a predetermined maximum value, particularly up to 1.

3. Method according to one of the preceding claims, wherein, in a test run (27), the accumulator value (A) is reset to the starting value and/or the speed value (G) or the advantage value (V) is ignored if it is detected that there is no overtaking lane (L) for the overtaking maneuver (25).

4. Method according to one of the preceding claims, wherein in a test run (27), the accumulator value (A) is reset to the starting value and/or the speed value (G) or the advantage value (V) is ignored if a change (sS) in the driving situation (S), in particular the speed value (G) or the advantage value (V) is greater than a predetermined termination value (S0).

5. Method according to one of the preceding claims, wherein for at least one subsequent test run (27), the advantage value (V) determined in each case is scaled with a scaling factor (F) which is greater than 1.

6. Method according to one of the preceding claims, wherein it is detected in a test run (27) that the speed value (G) is 0 or the other vehicle (17) is driving faster than the nominal speed (16) and in this case, on the one hand, the accumulator value (A) is reset to the starting value and/or the speed value (G) or the advantage value (V) is ignored and, on the other hand, at least one further test run (27) is performed.

7. Method according to one of the preceding claims, wherein the overtaking criterion (34) specifies that the accumulator value (A) is greater than a predetermined threshold value (A0) and/or that a rate of increase of the accumulator value (A) is greater than a predetermined minimum rate.

8. Method according to one of the preceding claims, wherein the overtaking criterion (34) is set in dependence on a remaining residual planned driving distance.

9. Control device (20) for a motor vehicle (10), wherein the control device (20) has a processor device (26) with program code (22) which is configured to perform a method according to one of the preceding claims when executed by the processor device (26).

10. Motor vehicle (10) having a control device (20) according to Claim 9.

## Revendications

1. Procédé d'utilisation d'un dispositif de commande (20) pour le guidage autonome d'un véhicule automobile (10), dans lequel une vitesse de consigne (16) est prédéfinie en tant que vitesse de conduite (14) du véhicule automobile (10) devant être réglée par le dispositif de commande (20), et un véhicule étranger (17) circulant plus lentement que la vitesse de consigne (16) est détecté par le dispositif de commande (20) au moyen d'un dispositif de détection (11), dans lequel une différence de vitesse (19) entre une vitesse de conduite (18) du véhicule étranger (17) et la vitesse de consigne (16) est supérieure à zéro mais inférieure à une valeur maximale prédéterminée (G0),
**caractérisé en ce que**, dans ce cas, une valeur accumulatrice (A) est réglée à une valeur de départ et, dans une pluralité de parcours de test (27) effectués successivement, une valeur de vitesse actuelle (G) respective de la différence de vitesse (19) est détectée, et une valeur d'avantage (V) est calculée en fonction de la valeur de vitesse (G) et la valeur d'avantage (V) est ajoutée à la valeur accumulatrice (A), et dans le cas où la valeur accumulatrice (A) satisfait à un critère (34) de dépassement prédéterminé, un signal (23) de dépassement est généré pour déclencher une manoeuvre (25) de dépassement, dans lequel
une période de temps (T) depuis laquelle le dispositif de reconnaissance (11) détecte le véhicule étranger (17) avec une valeur de confiance supérieure à une valeur de confiance minimale prédéterminée est déterminée sur un parcours de test (27), et dans le cas où la période de temps (T) est inférieure à une durée minimale (T0) prédéterminée, la valeur de vitesse (G) ou la valeur d'avantage (V) est ignorée et/ou la valeur accumulatrice (A) est réinitialisée à la valeur initiale.

2. Procédé selon la revendication 1, dans lequel, pour déterminer la valeur d'avantage (V), la valeur de vitesse (G) est affectée à un intervalle allant jusqu'à une valeur maximale prédéterminée, en particulier jusqu'à 1.

3. Procédé selon l'une des revendications précédentes, dans lequel, lors d'un parcours de test (27), la valeur accumulatrice (A) est réinitialisée à la valeur initiale et/ou la valeur de vitesse (G) ou la valeur d'avantage (V) est ignorée s'il est constaté qu'une voie de dépassement (L) est absente pour la manoeuvre de dépassement (25).

4. Procédé selon l'une des revendications précédentes, dans lequel, lors d'un parcours de test (27), la valeur accumulatrice (A) est réinitialisée à la valeur initiale et/ou la valeur de vitesse (G) ou la valeur d'avantage (V) est ignorée dans le cas où une modification de situation (sS) affectant la situation de conduite (S), notamment la valeur de vitesse (G) ou la valeur d'avantage (V), est supérieure à une valeur d'interruption prédéterminée (S0).

5. Procédé selon l'une des revendications précédentes, dans lequel la valeur d'avantage (V) respective déterminée est mise à l'échelle avec un facteur d'échelle (F) supérieur à 1 pour au moins un parcours de test (27) suivant.

6. Procédé selon l'une des revendications précédentes, dans lequel il est détecté sur un trajet de test (27) que la valeur de vitesse (G) est égale à 0 ou que le véhicule étranger (17) se déplace plus vite que la vitesse de consigne (16) et, dans ce cas, d'une part, la valeur accumulatrice (A) est réinitialisée à la valeur initiale et/ou la valeur de vitesse (G) ou la valeur d'avantage (V) est ignorée et, d'autre part, au moins un parcours de test (27) supplémentaire est effectué.

7. Procédé selon l'une des revendications précédentes, dans lequel le critère de dépassement (34) spécifie que la valeur accumulatrice (A) est supérieure à une valeur de seuil (A0) prédéterminée et/ou qu'un taux de croissance de la valeur accumulatrice (A) est supérieur à une vitesse minimale prédéterminée.

8. Procédé selon l'une des revendications précédentes, dans lequel le critère de dépassement (34) est réglé en fonction d'une distance de conduite résiduelle restante planifiée.

9. Dispositif de commande (20) destiné à un véhicule automobile (10), dans lequel le dispositif de commande (20) comprend un moyen à processeur (26) utilisant un code de programme (22) conçu pour mettre en oeuvre un procédé selon l'une des revendications précédentes lorsque celui-ci est exécuté par le moyen à processeur (26) .

10. Véhicule automobile (10) comportant un dispositif de commande (20) selon la revendication 9.
